Europäisches Patentamt

European Patent Office

Office européen des brevets

(19)

(11) Veröffentlichungsnummer: **0 111 969**
**B1**

(12) **EUROPÄISCHE PATENTSCHRIFT**

(45) Veröffentlichungstag der Patentschrift:
**22.03.89**

(21) Anmeldenummer: **83201764.4**

(22) Anmeldetag: **14.12.83**

(51) Int. Cl.⁴: **A 47 J 31/057, A 47 J 31/06**

(54) **Filtervorrichtung.**

(30) Priorität: **16.12.82 DE 8235364 U**

(43) Veröffentlichungstag der Anmeldung:
**27.06.84 Patentblatt 84/26**

(45) Bekanntmachung des Hinweises auf die Patenterteilung:
**22.03.89 Patentblatt 89/12**

(84) Benannte Vertragsstaaten:
**DE FR GB IT NL**

(56) Entgegenhaltungen:
**EP-A- 0 019 291
EP-A- 0 091 634
CH-A- 616 064
DE-A- 2 625 650
DE-U- 7 203 807
DE-U- 7 436 286
DE-U- 8 027 643
DE-U- 8 110 818
DE-U- 8 135 217
DE-U- 8 200 962**

(73) Patentinhaber: **N.V. Philips' Gloeilampenfabrieken,
Groenewoudseweg 1, NL-5621 BA Eindhoven (NL)**

(72) Erfinder: **Wieringa, Bauke Steven, p/a Int.
Octrooibureau B.V. Prof. Holstlaan 6, NL-5656 AA
Eindhoven (NL)**
Erfinder: **Borg, Hendrik Jan, p/a Int. Octrooibureau B.V.
Prof. Holstlaan 6, NL-5656 AA Eindhoven (NL)**
Erfinder: **Niezen, Barteld, p/a Int. Octrooibureau B.V.
Prof. Holstlaan 6, NL-5656 AA Eindhoven (NL)**

(74) Vertreter: **Bos, Kornelis Sjoerd et al, INTERNATIONAAL
OCTROOIBUREAU B.V. Prof. Holstlaan 6, NL-5656 AA
Eindhoven (NL)**

ACTORUM AG

## Beschreibung

Die Erfindung bezieht sich auf eine Filtervorrichtung für beispielsweise einen Kaffeeautomaten mit einem Gehäuse, in dessen Bodenbereich sich nur eine Ausströmungsöffnung befindet, deren Größe mittels eines handbetätigbaren Einstellmechanismus regelbar ist, welcher Einstellmechanismus drehbar im Gehäuse der Filtervorrichtung angeordnet und einem aus dem Gehäuse der Filtervorrichtung herausragenden, in einem Schlitz des Gehäuses verschiebbaren Betätigungsknopf zugeordnet ist, womit die Hubhöhe des Ventils regelbar ist.

Eine derartige Filtervorrichtung ist aus der DE-A-26 25 650 bekannt. Beim Zubereiten geringer Kaffeemengen, wofür eine entsprechend geringe Wassermenge notwendig ist, kann das Wasser nur während kurzer Zeit den Kaffeemehl berühren. Die Folge davon ist, daß der Kaffee-Extrakt qualitativ nicht optimal ist. Ein längerer Kontakt des heißen Wassers mit dem Kaffeemehl läßt sich durch eine kleinere Ausströmungsöffnung der Filtervorrichtung erzielen. Dadurch wird jedoch beim Zubereiten großer Kaffeemengen der Kontakt des heißen Wassers mit dem Kaffeemehl zu lange sein, wodurch der Kaffee-Extrakt qualitativ dann wieder nicht optimal ist. Dies führt zu dem Wunsch, die Durchlaufgeschwindigkeit des Kaffee-Extraktes durch die Filtervorrichtung abhängig von der Anzahl zuzubereitender Tassen regelbar zu machen. In der obengenannten DE-A-26 25 650 ist eine derartige regelbare Filtervorrichtung dargestellt.

Es ist zugleich erwünscht, die Ausströmungsöffnung völlig abschließbar zu machen um zu vermeiden, daß nach dem Zubereiten von Kaffee und bei entfernter Kaffeekanne, Kaffee-Extrakttropfen aus der Filtervorrichtung herauslecken, die eine darunter liegende Wärmeplatte verschmutzen können. Auch bei der genannten DE-A-26 25 650 ist die Ausströmungsöffnung abschließbar. Das Ventil ist dabei mittels elastischer Stege in einer unterhalb des Filtergehäuses angeordneten Verschlußmanschette getragen. Die Regelung der Größe der Ausströmungsöffnung erfolgt durch Verdrehung oder Verschiebung der Verschlußmanschette und damit des Ventils gegenüber der Ausströmungsöffnung. Erst beim Abschließen der Ausströmungsöffnung steht das Ventil unter dem Federdruck der elastischen Stege. Zum Verdrehen der Verschlußmanschette umfaßt der Einstellmechanismus eine bajonettverschlußartige Führung zwischen der Verschlußmanschette und dem Filtergehäuse. In einer alternativen Konstruktion wird eine vertikale Verschiebung der Verschlußmanschette erreicht mittels eines im Kaffeemaschinengehäuse gelagerten Stellnockens mit einem Stellarm.

Der Erfindung liegt die Aufgabe zugrunde, eine Konstruktion zu schaffen, mit der das Ventil zuverlässig gesteuert werden kann zum Regeln der Größe der Ausströmungsöffnung und zum Abschließen der Ausströmungsöffnung.

Die erfindungsgemäße Filtervorrichtung weist dazu in einer ersten Ausführungsform das Kennzeichnen auf, daß der Einstellmechanismus durch einen Arm gebildet ist, wobei ein Teil des Arms, der sich unter dem Ventil befindet, mit Unterstützungsflächen auf unterschiedlichen Pegeln versehen ist, zwischen denen sich schräge Auflaufflächen erstrecken, welche Unterstützungsflächen mit einem Ventilstößel des Ventils zusammenarbeiten.

Das Abschließen der Ausströmungsöffnung wird bei dieser Ausführungsform vom Betätigungsknopf bewirkt, wobei das Ventil durch die Kraft des federnden Elementes die Ausströmungsöffnung geschlossen hält.

Eine zweite Ausführungsform der erfindungsgemäßen Filtervorrichtung weist das Kennzeichen auf, daß ein durch ein zweites federndes Element beanspruchter unter dem Gehäuse der Filtervorrichtung herausragender Stift vorgesehen ist, der mittels eines in dem Gehäuse der Filtervorrichtung drehbaren Armes mit dem Ventil gekuppelt ist, wobei der Arm auf einer Seite des Drehpunktes mit dem Ventil verbunden und auf der anderen Seite des Drehpunktes mittels des zweiten federnden Elementes mit dem Stift gekuppelt ist, und der Stift durch eine unter die Filtervorrichtung stellbare Kaffeekanne derart eindrückbar ist, daß bei einer daruntergestellten Kaffeekanne die Ausströmungsöffnung von dem Ventil freigegeben ist und bei einer entfernten Kaffeekanne die Ausströmungsöffnung von dem Ventil geschlossen wird, und daß der Einstellmechanismus durch einen Schieber gebildet wird, der mit Unterstützungsflächen auf unterschiedlichen Pegeln versehen ist, zwischen denen sich eine schräge Auflauffläche erstreckt, welche Unterstützungsflächen als Anschläge für den Arm wirksam sind.

Das Abschließen der Ausströmungsöffnung wird dabei immer automatisch bewirkt nach Wegziehen der Kaffeekanne, unabhängig von der vom Einstellmechanismus eingestellten Größe der Ausströmungsöffnung. Dabei sei bemerkt, daß an sich aus CH-A-616 064 eine Kaffeemaschine bekannt ist, in der unterhalb eines Kaffeefilters eine drehbare, federbelastete Wippe vorgesehen ist zum Verschließen der Ausströmungsöffnung beim Herausnehmen des Filters bzw. des Kruges.

Vorzugsweise ist die Filtervorrichtung nach der Erfindung mit einer Überlauföffnung versehen.

Ausführungsbeispiele der Erfindung sind in der Zeichnung dargestellt und werden im folgenden näher beschrieben. Es zeigen:

Fig. 1 eine schaubildliche Ansicht einer Filtervorrichtung,

Fig. 2 einen Schnitt durch die Filtervorrichtung nach Fig. 1 gemäß der Linie II–II,

Fig. 3 eine Ansicht der Unterseite der Filtervorrichtung nach Fig. 1,

Fig. 4 einen Schnitt in vergrößertem Maßstab durch die Filtervorrichtung nach Fig. 3 gemäß der Linie IV–IV,

Fig. 5 eine schaubildliche Ansicht einer anderen Filtervorrichtung,

Fig. 6 eine Ansicht der Filtervorrichtung nach Fig. 5,

Fig. 7 einen teilweisen Schnitt durch die Filtervorrichtung nach Fig. 5 in vergrößertem Maßstab,

Fig. 8 eine Ansicht des Schiebers für den Einstellmechanismus der Filtervorrichtung nach Fig. 5.

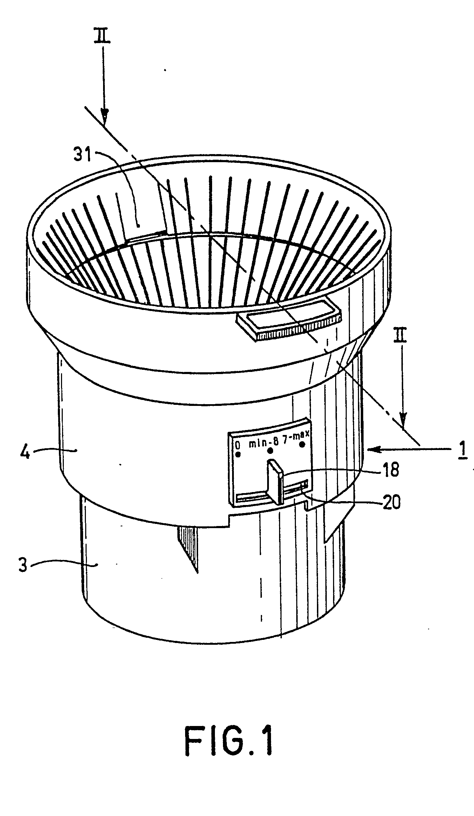

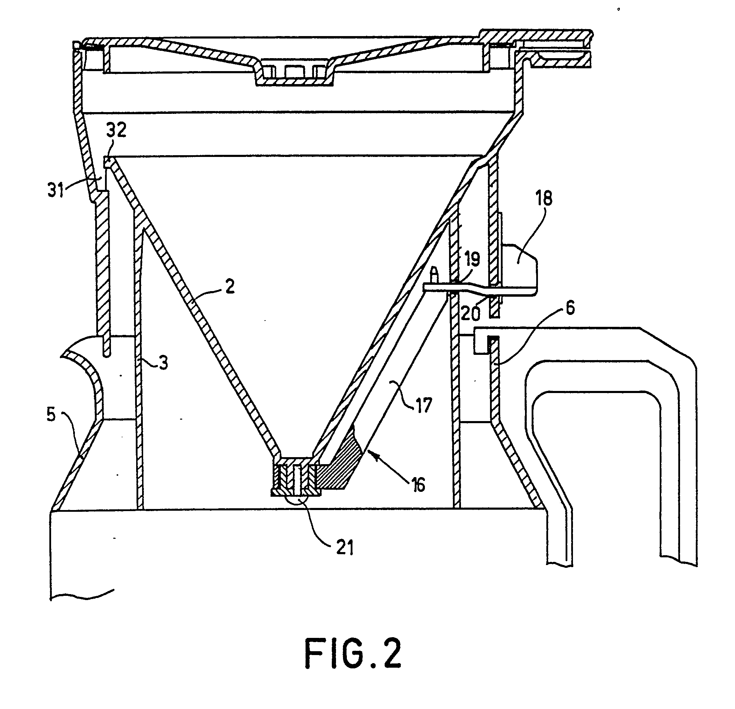

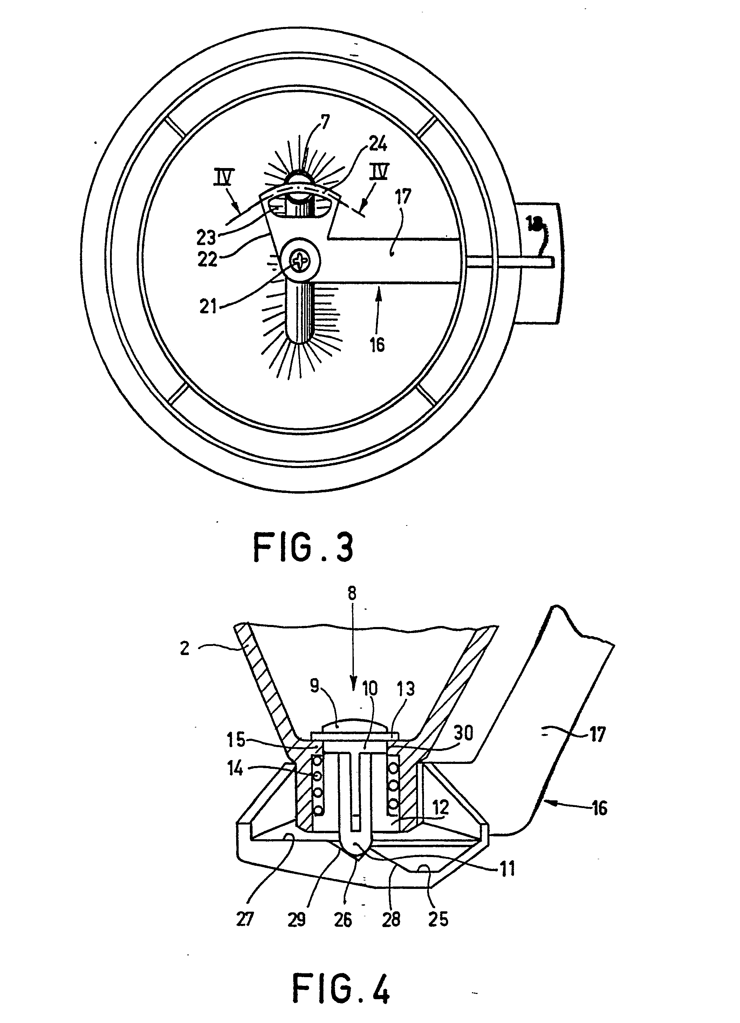

In den Figuren 1 bis 4 ist eine Filtervorrichtung dargestellt, die sich dazu eignet, auf eine Kaffeekanne gestellt zu werden. Das Gehäuse der Filtervorrichtung 1 wird durch einen kegelförmigen Teil 2 zum Aufnehmen einer Filtertüte, einen zylinderförmigen Teil 3 und einen zweiten konzentrisch um denselben liegenden kürzeren zylinderförmigen Teil 4 gebildet. Beim Aufstellen auf die Kaffeekanne 5 stützt der zweite zylinderförmige Teil 4 auf den Rand 6 der Kaffeekanne. In dem Boden des kegelförmigen Teils 2 befindet sich nur eine Ausströmungsöffnung 7, worin ein Ventil 8 angeordnet ist. Das Ventil hat einen Ventilkörper 9, der aus einer Ventilscheibe 10 und einem Ventilstiel 11 besteht, woran sich vier radial erstreckende Flügel 12 befinden, einen elastischen Dichtungsring 13 und eine Feder 14. In geschlossener Lage der Ausströmungsöffnung liegt der Dichtungsring auf dem Rand 15 der Ausströmungsöffnung. In geöffneter Lage kann der Kaffee-Extrakt zwischen die Flügel 12 hindurch in die Kaffeekanne strömen. Der handbetätigbare Einstellmechanismus 16 umfaßt einen Arm 17, von dem ein Ende an einem Betätigungsknopf 18 befestigt ist. Der Betätigungsknopf ragt durch Schlitze 19 und 20 in den Gehäuseteilen 3 bzw. 4 heraus. Das andere Ende des Arms ist um einen Punkt 21 in dem Boden drehbar. Ein Teil 22 des Arms erstreckt sich von dem Drehpunkt in Richtung quer zu dem Arm. In diesem Teil befindet sich eine Öffnung 23, wobei ein kreisbogenförmiger Randteil 24 der Öffnung, der am weitesten von dem Drehpunkt 21 liegt, sich unter dem Ventilstiel 11 befindet. Dieser kreisbogenförmige Randteil ist zu der Seite, die dem Ventilstiel zugewandt ist, mit Unterstützungsflächen 25, 26, 27 auf unterschiedlichen Pegeln versehen, zwischen denen sich schräge Auflaufflächen 28, 29 erstrecken und welche Unterstützungsflächen mit dem Ventilstiel 11 zusammenarbeiten. Der Randteil 24 hat eine niedrig liegende Unterstützungsfläche 25, eine mittlere Unterstützungsfläche 26 und eine hoch liegende Unterstützungsfläche 27. Befindet sich die niedrig liegende Unterstützungsfläche 25 unter dem Ventilstiel 11, so schließt das Ventil die Ausströmungsöffnung völlig ab und es können keine Tropfen aus der Filtervorrichtung weglecken. Befindet sich die mittlere Unterstützungsfläche 26 unter dem Ventilstiel (die in Fig. 4 dargestellte Lage), so wird das Ventil soweit gehoben, daß zwischen dem Rand 15 der Ausströmungsöffnung 7 und der Ventilscheibe 10 des Ventilkörpers eine ringförmige Öffnung 30 entsteht. Die Größe dieser ringförmigen Öffnung bestimmt die Durchströmungsgeschwindigkeit des Kaffee-Extraktes, das aus der Filtervorrichtung herausströmt. Diese Stellung ist gemeint zum Zubereiten einer geringen Anzahl Tassen Kaffee. Befindet sich die hoch liegende Unterstützungsfläche unter dem Ventilstiel, so wird das Ventil noch weiter gehoben und wird eine große Ausströmungsöffnung frei. Diese Stellung kann am besten benutzt werden beim Zubereiten einer größeren Anzahl Tassen Kaffee. Die jeweiligen Stellungen können durch eine Links- bzw. Rechtsverschiebung des Betätigungsknopfes 18 erhalten werden.

Der kreisbogenförmige Randteil 24 hat eine geringe Dicke um die Ausströmung des Kaffee-Extraktes möglichst wenig zu beeinträchtigen.

Zwischen den zwei zylinderförmigen Teilen 3 und 4 des Gehäuses befindet sich noch eine Überlauföffnung 31. Wenn beim Zubereiten von Kaffee das Ventil aus Versehen geschlossen wird oder wenn man viel Kaffee zubereiten möchte und das Ventil befindet sich in der Stellung für eine kleine Ausströmungsöffnung, so kann der Kaffee-Extrakt über den Rand 33 des punktförmigen Teils 2 strömen und durch die Überlauföffnung 31 zwischen die zylinderförmigen Teile 3 und 4 hindurch in die Kaffeekanne 5 strömen.

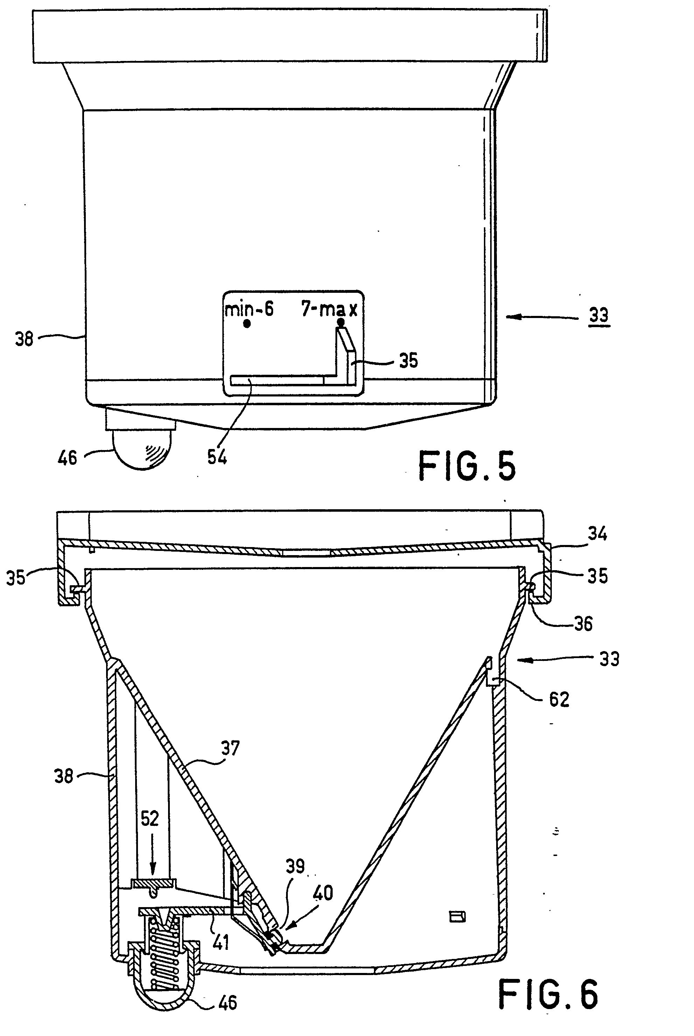

In den Fig. 5 bis 8 ist eine andere Filtervorrichtung nach der Erfindung dargestellt. Diese Filtervorrichtung 33 hängt in einem überhängenden Arm 34 eines weiterhin nicht dargestellten Kaffee-Automaten. Das Gehäuse der Filtervorrichtung weist dazu Nocken 35 auf, die auf einen Rand 36 des Arms 34 stützen. Die Filtervorrichtung läßt sich auf einfache Weise aus dem Arm entfernen und zwar zum Reinigen und zum Füllen. Das Gehäuse der Filtervorrichtung 34 wird durch einen kegelförmigen Teil 37 gebildet und zwar zum Aufnehmen einer Filtertüte und durch einen um diesen Teil liegenden zylinderförmigen Teil 38. Im Bodenbereich des kegelförmigen Teils befindet sich nur eine Ausströmungsöffnung 39 mit einem Ventil 40. Ein Arm 41 ist in dem Gehäuse der Filtervorrichtung drehbar gelagert. Dazu weist der Arm einen Nocken 43 auf, der in einem Hohlraum 43 des kegelförmigen Teils 37 drehen kann. Auf der einen Seite des Drehpunktes befindet sich das Ventil, das mit diesem Teil des Arms ein Ganzes bildet. Eine Blattfeder 44, die auf einer Seite in dem Gehäuse festgeklemmt ist, drückt mit der anderen Seite gegen den Arm 41, wodurch das Ventil 40 in Richtung der geschlossenen Lage der Ausströmungsöffnung gedrückt wird. Auf der anderen Seite des Drehpunktes ist der Arm mittels einer zweiten Feder 45 mit einem Stift 46 gekuppelt, der in dem Boden 47 des zylinderförmigen Teils 38 verschiebbar ist. In dem Boden 47 befindet sich eine große Durchlaßöffnung 48. Die Feder 45 liegt zwischen dem Hohlstift 46 und einer in dem Hohlstift verschiebbaren Büchse 49 eingeschlossen. Gegen den oberen Rand der Büchse stützt der Arm 41. Der Stift 46 ragt mit der kugelförmigen Unterseite unter den Bodenteil 47 des zylinderförmigen Teils 38 heraus und ist durch eine unter die Filtervorrichtung stellbare Kaffeekanne eindrückbar. Stellt man eine Kaffeekanne unter die Filtervorrichtung, so wird der Stift 46 durch den Rand der Kaffeekanne entgegen der Federkraft der zweiten Feder 45 eingedrückt, wodurch der Arm um den Drehpunkt (Hohlraum 43) dreht und das Ventil die Ausströmungsöffnung öffnet. Bei eingedrücktem Stift ist die Federkraft der zweiten Feder 45 größer als die der Blattfeder 44. Nimmt man die Kaffeekanne unter der Filtervorrichtung weg, so drückt die zweite Feder den Stift nach unten, wodurch die Federkraft verringert und kleiner wird als die Federkraft der Blattfeder 44, wodurch die Blattfeder das Ventil mit dem elastischen Ring 50 gegen den Rand 51 der Ausströmungsöffnung drückt und diese völlig abschließt. Nachtropfen, nachdem die Kaffeekanne entfernt ist, ist dadurch nicht mehr möglich.

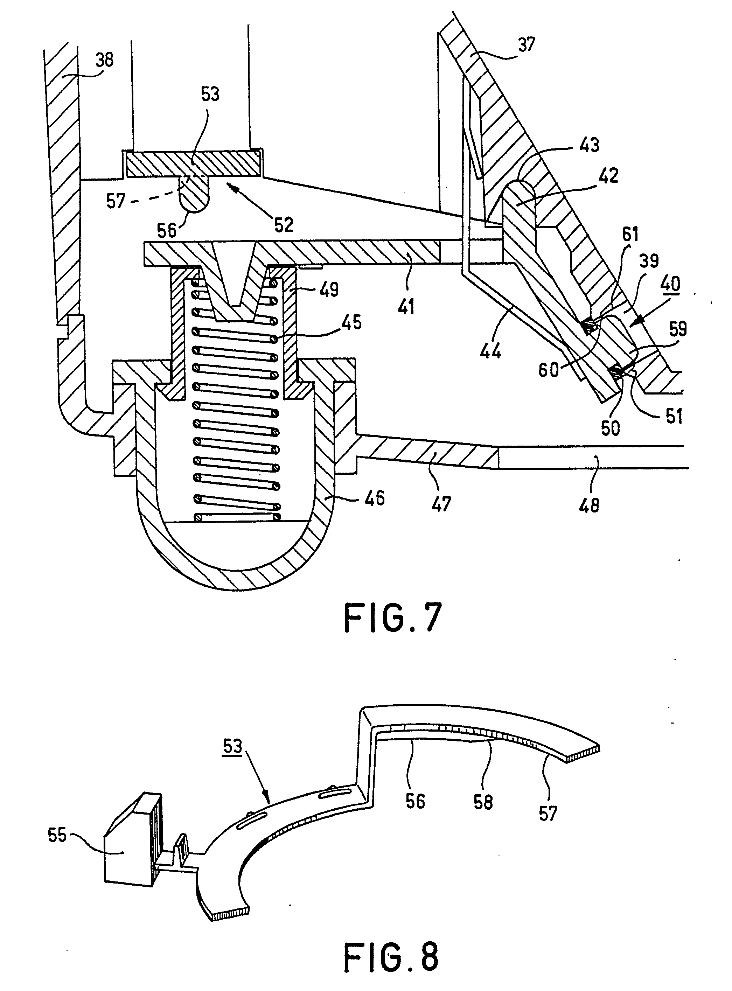

Der Einstellmechanismus 52 wird durch einen bogenförmigen Schieber 53 (Fig. 8) gebildet, dessen eines Ende durch einen Schlitz 54 in dem zylinderförmigen Gehäuseteil 38 der Filtervorrichtung ragt und an dem ein Betätigungsknopf 55 befestigt ist. Der Schieber ist auf der Unterseite mit zwei Unterstützungsflächen 56 und 57 auf unterschiedlichen Pegeln versehen, zwischen denen sich eine schiefe Auflauffläche 58 befindet. Die zwei Unterstützungsflächen dienen je als Anschlag für den Arm. Wenn die Unterstützungsflächen 56 gegenüber dem Arm 41 gedreht ist, kann der Arm bei einer unter die Filtervorrichtung gestellten Kaffeekanne nur über einen geringfügigen Winkel drehen, wodurch das Ventil sich zwar öffnet, wobei jedoch ein zylinderförmiger Teil 59 des Ventils sich noch in der Ausströmungsöffnung 39 befindet. Die ringförmige Öffnung 60 zwischen dem zylinderförmigen Teil 59 und der Innenwand 61 der Ausströmungsöffnung bestimmt dann im wesentlichen die wirkliche Durchlaßöffnung und folglich die Menge Kaffee-Extrakt, die aus der Filtervorrichtung strömt. Diese Stellung ist gemeint zum Zubereiten einer geringen Anzahl Tassen Kaffee. Wenn die Unterstützungsfläche 57 sich gegenüber dem Arm 41 befindet, ist der Verdrehungswinkel des Arms größer und wird der ganze zylinderförmige Teil 59 des Ventils sich außerhalb des Randes der Ausströmungsöffnung befinden. Der wirkliche Durchgang ist nun viel größer. Diese Stellung ist gemeint zum Zubereiten einer größeren Anzahl Tassen Kaffee.

Zwischen dem kegelförmigen Teil 37 und dem zylinderförmigen Teil 38 der Filtervorrichtung befindet sich ebenfalls eine Überlauföffnung 62.

**Patentansprüche**

1. Filtervorrichtung für beispielsweise einen Kaffee-Automaten mit einem Gehäuse (1), in dessen Bodenbereich sich nur eine Ausströmungsöffnung (7) befindet, deren Größe durch ein durch ein federndes Element (14) beanspruchtes Ventil (8) mittels eines handbetätigbaren Einstellmechanismus (16) regelbar ist, welcher Einstellmechanismus drehbar im Gehäuse (1) der Filtervorrichtung angeordnet und einem aus dem Gehäuse der Filtervorrichtung herausragenden, in einem Schlitz (20) des Gehäuses verschiebbaren Betätigungsknopf (18) zugeordnet ist, womit die Hubhöhe des Ventils regelbar ist, dadurch gekennzeichnet, daß der Einstellmechanismus (16) durch einen Arm (17) gebildet ist, wobei ein Teil (24) des Arms, der sich unter dem Ventil (8) befindet, mit Unterstützungsflächen (25, 26, 27) auf unterschiedlichen Pegeln versehen ist, zwischen denen sich schräge Auflaufflächen (28, 29) erstrecken, welche Unterstützungsflächen mit einem Ventilstößel (11) des Ventils (8) zusammenarbeiten.

2. Filtervorrichtung für beispielsweise einen Kaffee-Automaten mit einem Gehäuse (33), in dessen Bodenbereich sich nur eine Ausströmungsöffnung (39) befindet, deren Größe durch ein durch ein federndes Element (44) beanspruchtes Ventil (40) mittels eines handbetätigbaren Einstellmechanismus (52) regelbar ist, welcher Einstellmechanismus drehbar im Gehäuse (33) der Filtervorrichtung angeordnet ist und einem aus dem Gehäuse der Filtervorrichtung herausragenden, in einem Schlitz (54) des Gehäuses verschiebbaren Betätigungsknopf (55) zugeordnet ist, womit der Hubhöhe des Ventils regelbar ist, dadurch gekennzeichnet

— daß ein durch ein zweites federndes Element (45) beanspruchter unter dem Gehäuse (33) der Filtervorrichtung herausragender Stift (46) vorgesehen ist, der mittels eines in dem Gehäuse (33) der Filtervorrichtung drehbaren Armes (41) mit dem Ventil (40) gekuppelt ist, wobei der Arm auf einer Seite des Drehpunktes (43) mit dem Ventil (40) verbunden und auf der anderen Seite des Drehpunktes mittels des zweiten federnden Elementes (45) mit dem Stift (46) gekuppelt ist, und der Stift (46) durch eine unter die Filtervorrichtung stellbare Kaffeekanne derart eindrückbar ist, daß bei einer darunter gestellten Kaffeekanne die Ausströmungsöffnung (39) von dem Ventil freigegeben ist und bei einer entfernten Kaffeekanne die Ausströmungsöffnung von dem Ventil geschlossen wird, und

— daß der Einstellmechanismus (52) durch einen Schieber (53) gebildet wird, der mit Unterstützungsflächen (56) auf unterschiedlichen Pegeln versehen ist, zwischen denen sich eine schräge Auflauffläche (58) erstreckt, welche Unterstützungsflächen als Anschläge für den Arm (41) wirksam sind.

3. Filtervorrichtung nach Anspruch 1 oder 2, dadurch gekennzeichnet, daß die Filtervorrichtung (1, 33) mit einer Überlauföffnung (31, 62) versehen ist.

**Claims**

1. A filter device, for example for an automatic coffee maker, the device comprising a housing (1) in whose bottom portion only one discharge aperture (7) is formed whose size can be controlled by means of a manually operable control mechanism (16) by a valve (8) which is loaded by a resilient element (14), which control mechanism is pivotally mounted in the housing (1) of the filter device and has an associated actuating knob (18) which projects from the housing of the filter device and which is movable in a slot (20) of the housing, to control the lifting height of the valve, characterized in that the control mechanism (16) comprises an arm (17), a part (24) of the arm situated underneath the valve (8) being provided with supporting surfaces (25, 26, 27) at different levels between which supporting surfaces inclined run-on surfaces (28, 29) extend and which supporting surfaces co-operate with a valve lifter (11) of the valve (8).

2. A filter device, for example for an automatic coffee maker, comprising a housing (33) in whose bottom portion only one discharge aperture (39) is formed whose size can be controlled by means of a manually operable actuating mechanism (52) by a valve (40) which is loaded by a resilient element (44), which control mechanism is pivotally mounted in the housing (33) of the filter device and has an associated actuating knob (55) which projects from the housing of the filter device and which is movable in the slot (54) in the housing to control the lifting height of the valve, characterized in that

– there is provided a pin (46) which projects from underneath the housing (33) of the filter device and which is loaded by a second resilient element (45), which pin is coupled to the valve (40) by means of an arm (41) which is pivotable in the housing (33) of the filter device, the arm at one side of the pivot (43) being connected to the valve (40) and at the other side of the pivot, being coupled to the pin (46) by means of the second resilient element (45) and the pin (46) being depressable by a coffee jug which can be placed underneath the filter device, in such a way that when a coffee jug ist placed underneath said filter device the discharge aperture (39) is cleared by the valve and when the coffee jug is removed the discharge aperture is closed by the valve, and

– the control mechanism (52) comprises a slide (53) having supporting surfaces (56) at different levels between which an inclined run-on surface (58) extends, which supporting surfaces act as stops for the arm (41).

3. A filter device as claimed in Claim 1 or 2, characterized in that the filter device (1, 33) is provided with an overflow aperture (31, 62).

**Revendications**

1. Dispositif de filtrage destiné, par exemple, à une cafetière électrique et muni d'un boîtier (1) dont le fond ne présente qu'un seul orifice d'écoulement (7) dont la dimension peut être réglée par une soupape (8) sollicitée par un élément élastique (14), réglage qui est effectué par l'intermédiaire d'un mécanisme de réglage à commande manuelle (16) disposé de façon rotative dans le boîtier (1) du dispositif de filtrage et auquel est associé un bouton de commande (18) faisant saillie du boîtier du dispositif de filtrage et pouvant être déplacé dans une fente (20) du boîtier, bouton de commande qui permet de régler la course de la soupape, caractérisé en ce que le mécanisme de réglage (16) est formé par un bras (17) dont une partie (24), située au-dessous de la soupape (8), présente à des niveaux différents des surfaces d'appui (25, 26, 27) entre lesquelles s'étendent des surfaces en pente (28, 29), surfaces d'appui qui coopèrent avec un poussoir (11) de la soupape (8).

2. Dispositif de filtrage destiné, par exemple, à une cafetière électrique et muni d'un boîtier (33) dont le fond ne présente qu'un seul orifice d'écoulement (39) dont la dimension peut être réglée par une soupape (40) sollicitée par un élément élastique (44), réglage qui est effectué par l'intermédiaire d'un mécanisme de réglage (52) à commande manuelle disposé de façon rotative dans le boîtier (33) du dispositif de filtrage et auquel est associé un bouton de commande (55) faisant saillie du boîtier du dispositif de filtrage et pouvant être déplacé dans une fente (54) du boîtier, bouton de commande qui permet de régler la course de la soupape, caractérisé

– en ce qu'il est prévu une tige (46) faisant saillie de la face inférieure du boîtier (33) du dispositif de filtrage et sollicitée par un second élément élastique (45), tige qui est couplée à la soupape (40) au moyen d'un bras (41) pouvant tourner dans le boîtier (33) du dispositif de filtrage et qui, d'un côté du centre de rotation (43), est relié à la soupape (40) et, de l'autre côté du centre de rotation, est couplé à la tige (46) par le second élément élastique (45), et une verseuse pouvant être placée au-dessous du dispositif de filtrage peut enfoncer la tige (46) de façon que, en présence de la verseuse, l'orifice d'écoulement (39) soit libéré par le soupape et, en l'absence d'une verseuse, l'orifice sois fermé par la soupape, et

– en ce que le mécanisme de réglage (52) est formé par un coulisseau (53) présentant à des niveaux différents des surfaces d'appui (56) entre lesquelles s'étend une surface en pente (58), surfaces d'appui qui servent de butées au bras (41).

3. Dispositif de filtrage selon la revendication 1 ou 2, caractérisé en ce que le dispositif de filtrage (1, 33) présente une ouverture de trop-plein (31, 62).

II

31

II

4

3

0 min-8 7-max

18

20

1

FIG.1

FIG.2

FIG.3

FIG.4

min-6    7-max

38    ←    33

35

46    54    **FIG.5**

34

35    35

36

33

62

37

38

52

39

40

41

46    **FIG.6**

FIG.7

FIG.8